# FASCICULE DE BREVET EUROPEEN

(11) **EP 0 620 622 B1**
(45) Date de publication et mention de la délivrance du brevet: **16.07.1997**
(21) Numéro de dépôt: 93500046.3
(22) Date de dépôt: 15.04.1993
(51) Int. Cl.: H02B 1/06, H02G 3/14

(54) **Cadre embellisseur modulaire polydimensionnable espace pour supports d'appareils électriques**
Modularer, erweiterbarer Zierrahmen für Halteranordnungen elektrischer Einheiten
Expandable, modular decorative frame for the supports of electrical units

(43) Date de publication de la demande: 19.10.1994
(73) Titulaire: MATERIAL DE INSTALACION EUNEA, S.A., E-31100 Puente la Reina (Navarra) (ES)
(72) Inventeur: Miquel Marti, Salvador, E-08025 Barcelona (ES); Pla Jensen, Eduardo, E-08028 Barcelona (ES)
(74) Mandataire: Joly, Jean-Jacques

(56) Documents cités:
- BE-A- 790 581
- CH-A- 323 736
- DE-A- 2 452 173
- DE-C- 473 263
- NL-A- 6 402 786
- US-A- 3 197 549
- US-A- 5 123 680

## Description

L'invention concerne, comme l'indique le préambule, un CADRE EMBELLISSEUR MODULAIRE POLYDIMENSIONNABLE POUR SUPPORTS D'APPAREILS ELECTRIQUES, du type de ceux employés pour recouvrir périphériquement le support ou embase des appareils électriques, et plus concrètement des mécanismes de petit matériel électrique, notamment les supports d'appareils ou de mécanismes de petit matériel électrique encastré sur lequel sont installés lesdits mécanismes, avec les moyens opératoires externes, qui sont entourés ou encadrés par lesdits cadres embellisseurs qui complètent la finition esthétique extérieure.

L'objet de l'invention est conçu pour les systèmes de support de petit matériel électrique de nature modulaire où un cadre unique polydimensionnable par répétition successive du dimensionnement étalon permet d'obtenir des cadres simples, doubles, triples, etc., convenablement espacés les uns des autres et pouvant être disposés en ligne, aussi bien dans le sens horizontal que vertical ou entrecroisés dans les deux sens, en combinant des cadres aux telles caractéristiques.

En particulier, l'objet de l'invention est conçu et développé en vue d'être implanté dans le système modulaire unique d'appareils ou de mécanismes électriques objet du Brevet n° 545.782 en Espagne (N° 3620416 en Allemagne; n° 8607861 en France; n° 1197778 en Italie; n° 83108 au Portugal) de la demanderesse et, plus concrètement, en vue de son incorporation et montage sur les supports, eux aussi brevetés, de la demanderesse, du type modulaire unique disposant de moyens incorporés pour recevoir, par simple emboîtage à force, les cadres objet de l'invention, munis essentiellement de moyens stratégiques d'ancrage.

Les systèmes de solution qui peuvent être relevés dans l'état de la technique pour ce type de matériel sont multiples et divers. Les cadres embellisseurs pour ce genre d'objets, plus concrètement pour les appareils électriques, sont développés en fonction des caractéristiques de l'appareil électrique, du support qui les soutient et des moyens, design ou particularités présentés par ceux-ci.

Généralement, les cadres sont des corps indépendants servant uniquement pour un appareil ou mécanisme et/ou dans quelques cas, en fonction du système, pour deux mécanismes dans la mesure où ces derniers sont disposés sur un seul support.

De même ont été conçus des cadres doubles, triples ou multiples, mais en surdimensionnant leurs dimensions pour pouvoir remédier aux écarts d'emboîtage et en s'arrangeant pour que les moyens de fixation du cadre se trouvent, généralement, hors du support, avec les travaux additionnels de fixation que cela implique, ou en dotant en outre lesdits supports de moyens additionnels pour cette fonction et, en tout cas, en faisant que ne puisse être répété un même cadre pour différentes solutions.

L'invention vise à ce que lesdits moyens d'ancrage soient au nombre de quatre pour chaque module simple et situés l'un sur chacun des sommets du cadre (angle intérieur) dans une projection bissectrice audit angle.

L'invention vise également à donner une projection intérieure prolongée auxdits ancrages aux fins d'assemblage et de montage en des points relativement éloignés des bords du support pour les camoufler ou les masquer par-dessous les moyens opératoires des mécanismes électriques, bien que restant couverts, en définitive, par la section du cadre.

L'invention vise également à ce que lesdits moyens d'ancrage soient situés au-dessous du bord extérieur du cadre et, plus concrètement, en faisceaux avec la base ou face inférieure du cadre pour longer convenablement la hauteur des moyens opératoires desdits mécanismes électriques.

De même, l'invention vise aussi à ce que les moyens d'ancrage soient pourvus d'une certaine élasticité et d'un assemblage à onglets pour en faciliter le montage et offrir une meilleure fixation sous pression ou à force de celui-ci.

Pour ce qui est des brevets DE-A-2452173 et BE-A-790581 de l'état de la technique, ils reprennent deux versions pour la fabrication de cadres en différentes dimensions, pour installation de petits mécanismes électriques.

Plus précisément, l'objet des brevets en question se réfère à une manière de surdimensionner les modules d'intallation par association les uns avec les autres.

Le brevet DE-A-23452173 concerne plus précisément les plaques ou bases servant à l'installation des mécanismes qui, munis de moyens latéraux d'emboîtement, s'assemblent pour se multiplier.

La solution apportée par le brevet BE-A-790581 est également par assemblage emboîté mais la disposition est par assemblage linéaire, non latéral, et comporte deux fragments modulaires, un intermédiaire comportant deux moitiés symétriques et autre extrême fermant la pièce. La formule d'assemblage emboîté proposée dans les brevets DE-A-2452173 et BE-A-790581 décrit un moyen d'élargissement ou de répétition du cadre.

Les cadres sont polydimensionnables en fonction des moyens d'ancrage originaux que l'invention incorpore.

Le format du cadre en différentes tailles est directement moulé avec les mesures normalisées, selon les dimensions souhaitées.

La répétition des moyens d'ancrage en rend plus facile la moulure.

Cette répétition des moyens d'ancrage permet leur enclavement en un, deux, trois ou plusieurs châssis métalliques de base, alignés verticalement ou horizontalement.

Le cadre selon l'invention est une moulure au format quadrangulaire régulier, aux dimensions internes conformes aux normes et, par conséquent et principalement, à la résultante du système modulaire unique du Brevet n° ES 545.782, au profil externe en semi-arche convexe, les plans intérieurs du creux étant concaves afin de recouvrir les ancrages.

L'invention concerne un cadre embellisseur modulaire polydimensionnable pour supports ou embases d'appareils électriques présentant les caractéristiques énoncées dans la revendication 1.

Une autre caractéristique de l'invention est que ledit cadre présente des moyens d'ancrage femelles disposés à l'intérieur du cadre en une projection bissectrice à chaque sommet et en faisceaux avec le plan inférieur de ce dernier.

Une autre caractéristique de l'invention est que lesdits ancrages femelles comportent une ramification verticale de composition géométrique mixte en deux tronçons qui ont une extrémité libre et une autre rattachée au sommet, la première habilitée à entrer, s'emboîter et se fixer à force sur les moyens du support, et l'autre rigide et résistante mais avec un certain, bien que faible, moment d'élasticité entre cette dernière et la première en vue de faciliter ladite fonction d'ancrage.

Une autre caractéristique de invention est que l'extrémité libre de la ramification comporte un sertissage en forme de pince, constitué par une buse tubulaire divisée en portions (trois) par de fines rainures verticales et pourvue d'une ouverture radiale à ± 45°, opposée au tronçon rigide et dont l'ouverture présente des chants verticaux en chanfrein rentrant pour faciliter l'entrée.

Une autre caractéristique de l'invention est que ladite buse présente à l'intérieur, convenablement centrée, une strie ou nervure torique qui fait fonction de segment d'emboîtage ou d'encastrement dans le verrouillage contre le téton mâle d'ancrage du support.

Une autre caractéristique de l'invention est que le second tronçon de la ramification comporte une cloison ou gousset-cornière tangent perpendiculairement à la génératrice de la buse tubulaire femelle d'ancrage, bissectrice à l'arête intérieure du cadre et séparé du corps de la buse par une étroite rainure verticale qui occupe plus des deux tiers de la partie supérieure, se rattachant par un tronçon court inférieur à la buse.

Cette faible séparation confère à la buse une certaine marge d'expansion élastique pour céder aux pressions de son ancrage contre le téton mâle du support.

Une autre caractéristique de l'invention est que le sommet dudit cadre est un angle concave arqué en projection adossée.

Une autre caractéristique de l'invention est que les moyens mâles d'ancrage sur le support sont des tétons cylindriques en forme conique à projection renversée avec des moyens femelles de verrouillage, dont le diamètre est calculé en rapport avec le diamètre intérieur de l'ancrage femelle, lesdits tétons étant tangents au rebord intérieur du creux du support, pour des raisons stratégiques d'espace, pour que les chanfreins rentrants de l'ouverture des ancrages femelles du cadre franchissent les coins desdits rebord et téton.

Les caractéristiques essentielles de l'invention apparaîtront plus clairement à l'aide de la description qui va suivre, faite en référence à la planche de dessins annexée à ce mémoire et où sont représentés, de manière schématique et uniquement à titre d'exemple, les détails préférés de l'invention.

Sur ces dessins:

La figure 1 est une vue en perspective arrière de l'ensemble d'un cadre embellisseur dans sa version simple, selon l'invention.

La figure 2 est une vue en perspective analogue à la précédente, vue de l'extérieur.

La figure 3 est un détail en perspective grossi des moyens d'ancrage femelles du cadre et mâles du support, suivant les détails A-B de la figure 1.

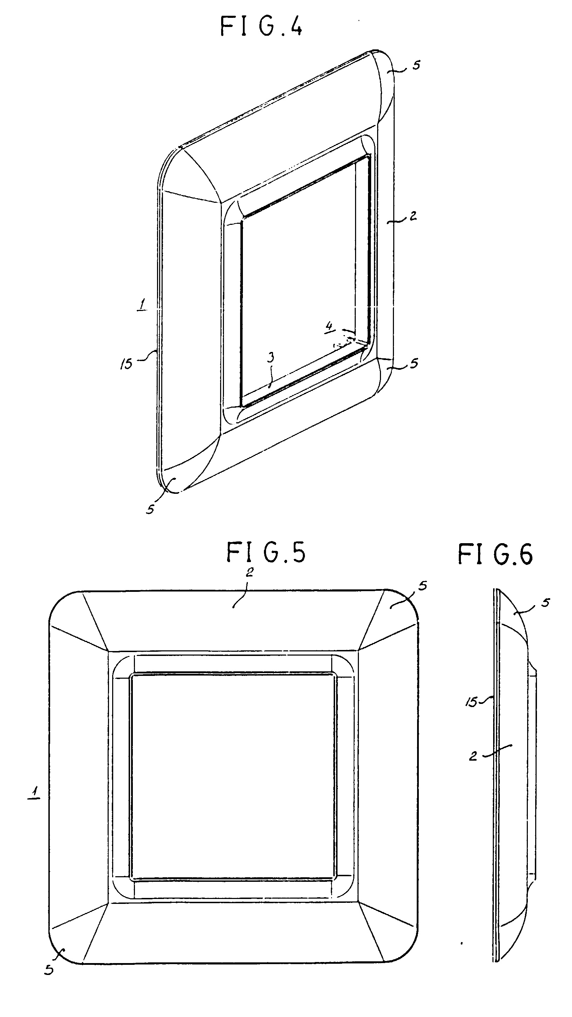

La figure 4 est une vue en perspective du cadre vue de l'extérieur.

La figure 5 est une vue de élévation de face du cadre.

La figure 6 est une vue de profil du cadre, selon la figure précédente.

La figure 7 est une vue en élévation de face d'un cadre double.

La figure 8 est une vue de profil se rapportant à la figure précédente.

La figure 9 est une vue en élévation de face d'un cadre triple.

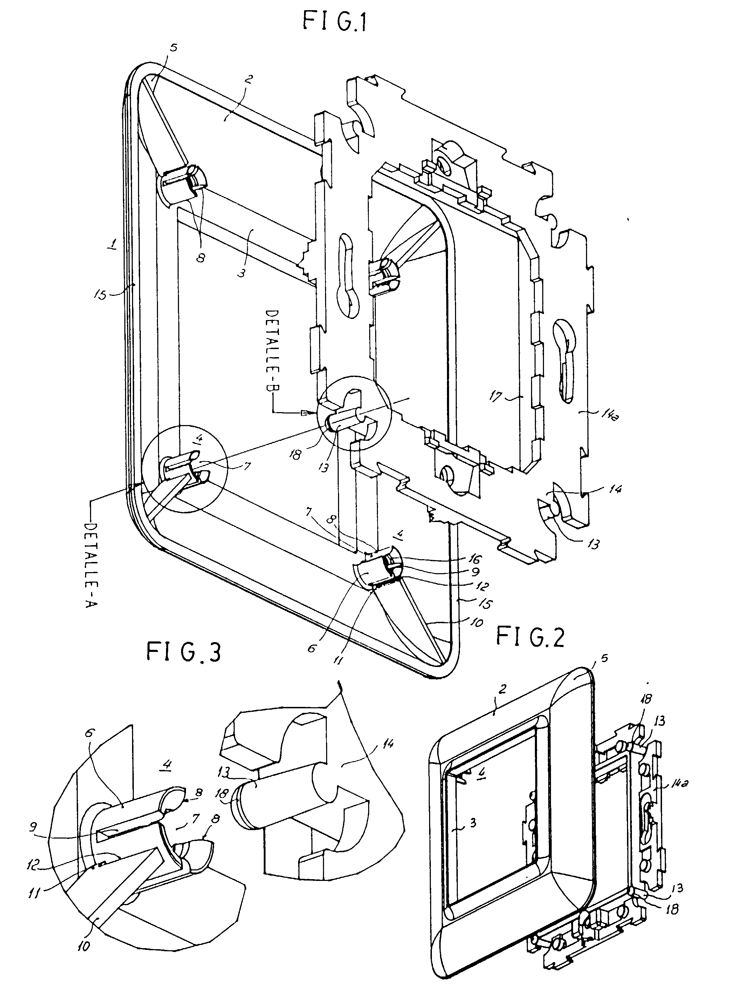

Description faite en référence auxdites illustrations et mettant l'accent sur la représentation de l'ensemble de la figure 1, qui montre un cadre simple (1) au format général quadrangulaire régulier constitué par une moulure (2) aux sommets (5) en arcs concaves à projection biseautée au profil extérieur en semi-arche convexe (2), avec un socle intérieur plat (3) et des moyens d'ancrage (4) femelles constitués par une ramification bissectrice aux angles (5) et en faisceaux ou de niveau avec le plan inférieur ou base (15) du cadre (1).

La portion (4) qui constitue l'ancrage femelle proprement dit, est constituée par une buse tubulaire (6) qui constitue l'organe de raccordement et de fixation, pourvue d'une ouverture radiale d'entrée (7) à ± 45° aux chants verticaux à chanfreins rentrants (8) et au diamètre calculé pour s'encastrer avec le sertissage ou emboîtement mâle du châssis ou bâti support de l'appareil électrique.

La buse tubulaire (6), outre ladite ouverture d'entrée (7), est divisée en portions égales au moyen de fines rainures verticales (9) qui lui confèrent une marge d'élasticité considérable dans son ancrage contre l'organe mâle du support.

De même cette buse (6), intérieure et centrée, présente une strie ou nervure (16) faisant office de sertissage ou emboîtement mâle pour s'emboîter à force sur l'organe mâle d'ancrage du support.

Le tronçon non libre de la ramification de l'ancrage (4) comporte une cloison ou gousset (10) de chant et bissectrice au sommet (6), perpendiculaire et tangente à la buse (6) et raccordée à ladite buse par un fragment inférieur (11) de la cloison (10) et, du reste, légèrement séparée par une mince rainure (12) conférant une certaine expansion élastique à la buse (6) quand elle exerce une pression contre l'ancrage mâle du support qui est représenté plus en détail sur la figure 3 des dessins.

L'encastrement ou emboîtement qui est réalisé pour le raccordement de l'ancrage (4) aux moyens mâles du support (figure 3), s'établit entre la buse tubulaire (6) dudit ancrage et un téton cylindrique (13) à projection coniforme inversée, adossé ou tangentiel aux coins (14) de l'encadrement intérieur (17) du bâti ou châssis (14a). L'ouverture radiale (7) de la buse (6) facilite l'entrée de l'ancrage (4) jusqu'à verrouiller le téton (13) dans le trou (8) dudit ancrage, de sorte que ladite ouverture (7) s'adapte ou épouse le coin (13) de l'encadrement intérieur (14) de façon que les rainures (9) admettent toutes éventuelles exigences d'expansion de l'ancrage (4) quand l'ouverture (7) requiert, en sa convergence, un certain effort de dilatation pour que le téton ou emboîtement mâle (13) s'emboîte à force dans la buse (6) .

De façon complémentaire, la nervure torique (16) de la buse (6) fait fonction de segment d'emboîtement ou de compensation contre le diamètre coniforme du téton (13) qui présente, en outre, une entaille ou encoche annulaire (18) où sera verrouillée, alternativement, la nervure (16) pour éviter tout désancrage entre l'ancrage mâle (13) et l'ancrage femelle (4).

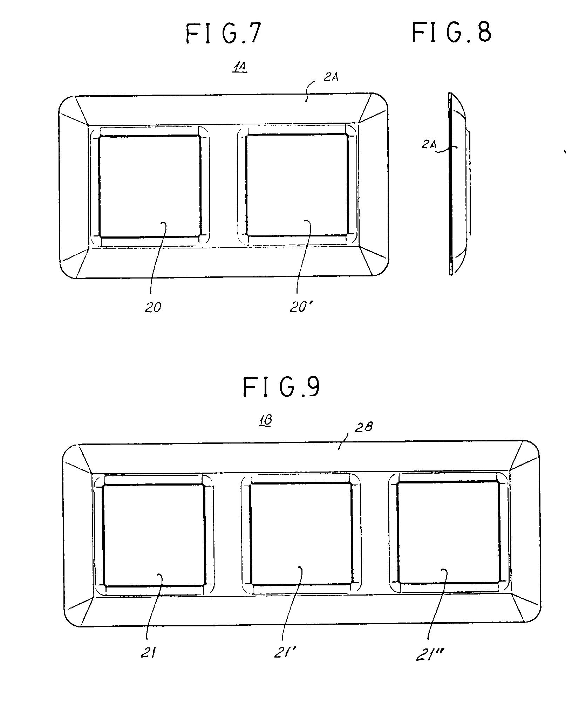

Cette solution est également valable et identique pour un cadre embellisseur double ou triple, comme le montrent les figures 7 et 9, quadruple ou successives si nécessaire.

En nous reportant auxdites représentations (figures 7 et 9), il suffit de dimensionner proportionnellement l'ensemble (1A) pour obtenir un cadre double (2A), ou un ensemble (1B) pour obtenir un cadre triple (2B), pourvu en ses sommets de moyens d'ancrage femelles identiques (4) pour pouvoir fixer ou assurer dans chaque cas, en utilisant les sertissures ou emboîtements mâles (13) des châssis ou embases (14a), le cadre (2A ou 2B) en tous ses sommets qui, comme on peut le constater, ont été uniquement prolongés dimensionnellement sur deux de leurs côtés parallèles longitudinaux en maintenant la dimension de base des autres côtés parallèles transversaux suivant le patron ou modèle de base du cadre modulaire simple (1) (figure 1), bien qu'espacés à équidistance et de manière homologue dans deux creux égaux (20-20') ou dans trois creux égaux (21-21'-21").

## Revendications

1. CADRE EMBELLISSEUR MODULAIRE POLYDIMENSIONNABLE POUR SUPPORTS OU EMBASES D'APPAREILS ELECTRIQUES, qui est constitué par un cadre modulaire au format normalisé (1), caractérisé en ce qu'il comporte une moulure carrée-régulière (1) aux coins symétriques (5), au profil en semi-arche convexe (2), bordée par un socle plat (3) avec des moyens d'ancrage femelles (4) se projetant axialement suivant la bissectrice des sommets (5) desdits coins, qui sont verticalisés et en faisceaux ou de niveau avec la base ou face inférieure (15) du cadre (1).

2. CADRE EMBELLISSEUR MODULAIRE POLYDIMENSIONNABLE ESPACE POUR SUPPORTS OU EMBASES D'APPAREILS ELECTRIQUES, qui comporte une moulure (1) au format carré normalisé, selon la revendication 1, caractérisé en ce qu'il est seulement nécessaire de dimensionner modulairement, de manière répétée et successive, deux côtés parallèles longitudinaux du cadre (1) en maintenant invariablement symétriques les sommets (5), et de les espacer à équidistance (20-20') (21-21'-21'') pour obtenir des versions doubles, triples, quadruples ou successives desdits cadres (1).

3. CADRE EMBELLISSEUR MODULAIRE POLYDIMENSIONNABLE POUR SUPPORTS OU EMBASES D'APPAREILS ELECTRIQUES, selon la revendication 1, caractérisé en ce que les ancrages femelles (4), comprennent une ramification radiale - coïncidente avec la bissectrice de l'angle (5) composée de deux tronçons, l'un intérieur libre à emboîtage femelle et l'autre rigide de raccordement avec ledit sommet (5).

4. CADRE EMBELLISSEUR MODULAIRE POLYDIMENSIONNABLE POUR SUPPORTS OU EMBASES D'APPAREILS ELECTRIQUES, selon la revendication 3, caractérisé en ce que le moyen d'emboîtage de la ramification d'ancrage (4) est une buse tubulaire (6) pourvue d'une ouverture radiale (± 45°) (7) opposée au tronçon rigide qui comporte deux chants verticaux en chanfrein rentrant (8) et, quant au reste, elle est divisée en portions égales au moyen de minces rainures verticales (9).

5. CADRE EMBELLISSEUR MODULAIRE POLYDIMENSIONNABLE POUR SUPPORTS OU EMBASES D'APPAREILS ELECTRIQUES, selon la revendication 1, caractérisé en ce que ladite buse d'emboîtage femelle (6) comporte, à l'intérieur et centrée, une strie ou nervure torique (16).

6. CADRE EMBELLISSEUR MODULAIRE POLYDIMENSIONNABLE POUR SUPPORTS OU EMBASES D'APPAREILS ELECTRIQUES, selon la revendication 3, caractérisé en ce que le tronçon interne rigide s'emboîtant avec le sommet (5) de l'ancrage (4) comporte une cloison ou gousset (10) de chant tangente à la buse (6) située sur la bissectrice au sommet (5), partiellement rattachée par une petite portion inférieure (11) à ladite buse (6), le reste étant pourvu d'une mince rainure verticale (12) de séparation entre le gousset (10) et la buse (6).

7. CADRE EMBELLISSEUR MODULAIRE POLYDIMENSIONNABLE POUR SUPPORTS OU EMBASES D'APPAREILS ELECTRIQUES, selon une quelconque des revendications 1 et 3 à 5, caractérisé en ce que les moyens mâles d'ancrage comportent un téton cylindrique à projection coniforme inversée (13) au diamètre proportionnel croissant vers le dessus ou décroissant vers le bas, selon le sens du diamètre intérieur de la buse (6) de l'ancrage femelle (4), adossé et tangent aux arêtes (14) de l'encadrement intérieur (17) des bâtis-embases (14a) et comportant une entaille ou encoche torique très mince (18) pour le verrouillage circonférenciel de la nervure torique (16) de la buse tubulaire (6).

## Patentansprüche

1. Modularer, vielfach erweiterbarer Zierrahmen für Träger oder Sitzflächen elektrischer Geräte, der aus einem modularen Rahmen (1) mit normalisiertem Format besteht, dadurch gekennzeichnet, daß er eine regelmäßige viereckige Leiste (1) umfaßt, mit symmetrischen Ecken (5), einem konvexen, halbbogenförmigen Profil (2) und einem anliegenden flachen Sockel (3) mit hohlen Verankerungsmitteln (4), die sich axial gemäß der Halbierende der Spitzen der besagten Ecken (5) und senkrecht und gebündelt oder in gleicher Höhe mit der Grundfläche oder unteren Seite (15) des Rahmens (1) erstrecken.

2. Modularer, vielfach erweiterbarer Zierrahmen für Träger oder Sitzflächen elektrischer Geräte, der eine Leiste (1) mit normalisiertem viereckigem Format umfaßt, gemäß Anspruch 1, dadurch gekennzeichnet, daß man nur braucht, zwei parallele Längsseiten des Rahmens (1) modular, wiederkehrend und nacheinander zu bemessen während man die Spitzen (5) unverändert symmetrisch aufrechterhält, und sie in gleichen Abständen (20-20') (21-21'-21") zu legen, um zweifache, dreifache, vierfache oder nacheinanderfolgende Ausführungen der besagten Rahmen (1) zu erreichen.

3. Modularer, vielfach erweiterbarer Zierrahmen für Träger oder Sitzflächen elektrischer Geräte gemäß Anspruch 1, dadurch gekennzeichnet, daß die hohlen Verankerungsmittel (4) eine radiale, mit der Halbierende der Ecke (5) übereinstimmende Verzweigung umfaßen, die aus zwei Abschnitten besteht deren einer ein innerer, freier Abschnitt mit hohler Einfügung ist und deren anderer ein starrer Abschnitt zum Anschluß an der besagten Spitze (5) ist.

4. Modularer, vielfach erweiterbarer Zierrahmen für Träger oder Sitzflächen elektrischer Geräte gemäß Anspruch 3, dadurch gekennzeichnet, daß das Einfügungsmittel der Verankerungsverzweigung (4) eine rohrförmige Hülse (6) ist, die eine radiale (±45°), dem starren Abschnitt gegenüberliegende Öffnung (7) umfaßt, die zwei senkrechten Kanten (8) mit nach innen gerichteten Fase aufweist, und die, außerdem, durch enge senkrechte Nuten (9) in gleichen Teile getrennt ist.

5. Modularer, vielfach erweiterbarer Zierrahmen für Träger oder Sitzflächen elektrischer Geräte gemäß Anspruch 1, dadurch gekennzeichnet, daß die besagte hohle Einfügungshülse (6) innen eine zentrierte torische Riefe oder Rippe (16) aufweist.

6. Modularer, vielfach erweiterbarer Zierrahmen für Träger oder Sitzflächen elektrischer Geräte gemäß Anspruch 3, dadurch gekennzeichnet, daß der innere starre, mit der Spitze (5) des Verankerungsmittels (4) eingefügte Abschnitt eine senkrechte, der auf der Halbierende der Spitze (5) liegenden Hülse (6) tangierende Wand oder Eckversteifung (10) aufweist, die mit einem kleinen unteren Teil (11) an der besagten Hülse (6) teilweise angeschloßen ist, wobei der verbleibende Teil eine dünne senkrechte Trennrille (12) zwischen der Eckversteifung (10) und der Hülse (6) aufweist.

7. Modularer, vielfach erweiterbarer Zierrahmen für Träger oder Sitzflächen elektrischer Geräte gemäß irgendeinem der Ansprüche 1 und 3 bis 5, dadurch gekennzeichnet, daß die vorspringenden Verankerungsmittel einen zylindrischen Ansatz (13) mit umgekehrter kegelförmiger Projektion aufweisen, dessen Durchmesser proportional nach oben zunimmt oder nach unten abnimmt, gemäß der Richtung des inneren Durchmessers der Hülse (6) des hohlen Verankerungsmittels (4), wobei der Ansatz an den Kanten (14) des inneren Rahmens (17) der Gehäuse oder Sitzflächen (14a) anliegt und tangiert und eine sehr dünne, torische Kerbe oder Vertiefung (18) zum Umfangseinrasten der torischen Rippe (16) der rohrförmigen Hülse (6) aufweist.

## Claims

1. Polydimensional modular decorative frame for supports or bases of electrical apparatus, which is constituted by a modular frame of standardized format (1), characterized in that it comprises a regular square moulding (1) with symmetrical corners (5) of convex semi-arch profile (2), bordered by a flat base (3) with female anchoring means (4) projecting axially along the bisectrix of the apices (5) of said corners, which are verticalized and in bundles or level with the base or lower face (15) of the frame (1).

2. Polydimensional modular decorative frame for supports or bases of electrical apparatus which comprises a moulding (1) of standardized square format, according to Claim 1, characterized in that it is only necessary to dimension modularly, in repeated and successive manner, two longitudinal parallel sides of the frame (1) by maintaining invariably symmetrical the apices (5) and to space them at equidistance (20-20') (21-21'-21") to obtain double, triple, quadruple or successive versions of said frames (1).

3. Polydimensional modular decorative frame for supports or bases of electrical apparatus according to Claim 1, characterized in that the female anchorings (4) comprise a radial ramification merging with the bisectrix of the angle (5) composed of two sections, one inside and free for female fitting and the other rigid for connection with said apex (5).

4. Polydimensional modular decorative frame for supports or bases of electrical apparatus, according to Claim 3, characterized in that the means for fitting the anchoring ramification (4) is a tubular nozzle (6) provided with a radial opening (+/- 45°) (7) opposite the rigid section which comprises two vertical edges in re-entrant chamfer (8) and, as for the rest, it is divided into equal portions by means of thin vertical grooves (9).

5. Polydimensional modular decorative frame for supports or bases of electrical apparatus, according to Claim 1, characterized in that said female fitting nozzle (6) comprises, inside and centred, a toric stria or rib (16).

6. Polydimensional modular decorative frame for supports or bases of electrical apparatus, according to Claim 3, characterized in that the rigid inner section fitting with the apex (5) of the anchoring (4) comprises a partition or gusset (10) of edge tangential to the nozzle (6) located on the bisectrix at the apex (5), partially attached by a small lower portion (11) to said nozzle (6), the rest being provided with a thin vertical groove (12) for separation between the gusset (10) and the nozzle (6).

7. Polydimensional modular decorative frame for supports or bases of electrical apparatus, according to any one of Claims 1 and 3 to 5, characterized in that the male anchoring means comprise a cylindrical stud with reversed cone-formed projection (13) with proportional diameter increasing towards the top or decreasing downwardly, in the direction of the inner diameter of the nozzle (6) of the female anchoring (4), abutting against and tangential to the edges (14) of the inner framework (17) of the base frames (14a) and comprising a very thin toric cut or notch (18) for the circumferential locking of the toric rib (16) of the tubular nozzle (6).
